(19) **Europäisches Patentamt / European Patent Office / Office européen des brevets**

(11) **EP 4 300 261 B1**

(12) **FASCICULE DE BREVET EUROPEEN**

| | |
|---|---|
| (45) Date de publication et mention de la délivrance du brevet: **05.11.2025 Bulletin 2025/45** | (51) Classification Internationale des Brevets (IPC): **G06F 1/324** (2019.01)   **G06F 1/3212** (2019.01) |
| (21) Numéro de dépôt: **23180805.6** | (52) Classification Coopérative des Brevets (CPC): **G06F 1/3212; G06F 1/324** |
| (22) Date de dépôt: **22.06.2023** | |

(54) **PROCÉDÉ DE GESTION D'UN COMPTEUR COMMUNICANT**

**VERFAHREN ZUR VERWALTUNG EINES KOMMUNIKATIONSZÄHLERS**

**METHOD FOR MANAGING A COMMUNICATING METER**

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **29.06.2022 FR 2206570**

(43) Date de publication de la demande:
**03.01.2024 Bulletin 2024/01**

(73) Titulaire: **Sagemcom Energy & Telecom SAS**
**92270 Bois-Colombes (FR)**

(72) Inventeurs:
• **SABROUI, Abbas**
**92500 RUEIL MALMAISON (FR)**
• **BASTURK, Ahmet Samet**
**92500 RUEIL MALMAISON (FR)**
• **ABID, Oussama**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
EP-A1- 2 034 281   JP-A- S60 190 814
US-A- 4 918 995   US-A1- 2012 304 779
US-B1- 11 320 347

**Description**

DOMAINE TECHNIQUE

L'invention concerne le domaine des compteurs communicants comprenant une unité de mesure et concerne plus particulièrement le domaine de la gestion des compteurs communicants pour réduire la consommation énergétique du compteur communicant.

ETAT DE LA TECHNIQUE ANTERIEURE

D'une manière connue, l'Internet des Objets (IoT, « Internet of Things » en anglais) est en pleine expansion. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour la collecte de relevés de consommations d'eau ou pour la surveillance à distance de conditions environnementales (température, pression...). L'Internet des Objets est considéré comme la troisième évolution de l'Internet, baptisée Web 3.0. L'Internet des Objets revêt un caractère universel pour désigner des objets connectés aux usages variés, par exemple dans le domaine de la e-santé ou de la domotique.

Une première approche adopté pour interconnecter des objets, appelés objets communicants (« IoT device » en anglais), dans le cadre de l'Internet des Objets, s'appuie sur un déploiement, maîtrisé par un opérateur, de passerelles de collecte situées sur des points géographiquement hauts. Hors opérations de maintenance, ces passerelles sont fixes et permanentes. On peut par exemple citer sur ce modèle les réseaux SigFox (marque déposée) ou ThingPark (marque déposée). Par exemple, en France, le réseau SigFox (marque déposée) s'appuie sur les points hauts des sites de transmission de TDF (« Télédiffusion De France »). Ces passerelles de collecte communiquent avec les objets communicants grâce à des systèmes de communication radio moyenne ou longue portée (e.g., système LoRa (marque déposée) de la société Semtech). Cette approche s'appuie sur un nombre limité de passerelles de collecte (difficulté de déploiement de nouvelles infrastructures réseau), ainsi que sur un accès montant (« uplink » en anglais) fiable et sécurisé avec un ou plusieurs serveurs de collecte.

Une seconde approche consiste à connecter des objets communicants au travers de passerelles résidentielles. On peut par exemple citer la technologie Energy Gateway. Un système selon la technologie Energy Gateway est composé de deux parties distinctes : d'une part, une passerelle résidentielle et des capteurs périphériques, qui sont hébergés chez le consommateur et qui permettent la collecte d'informations, la transmission de ces informations à un serveur de collecte, ainsi que le contrôle de déclenchement de diverses actions (contrôle de l'enclenchement des radiateurs ou du chauffe-eau par exemple) ; d'autre part, le serveur de collecte qui assure la mise à disposition des informations reçues et la transmission de commandes pour le contrôle de déclenchement de diverses actions. Ce serveur de collecte est accessible via l'Internet. Les technologies radio employées pour communiquer avec les objets communicants selon cette seconde approche sont de relative courte portée (par exemple de type Zigbee (marque déposée), Bluetooth (marque déposée) ou Wi-Fi (marque déposée)) pour desservir une collecte locale restreinte aux objets de l'habitat.

De tels objets communicants comportent typiquement un ou plusieurs capteurs, et sont typiquement alimentés par piles (ou batteries). Une difficulté réside dans la préservation de la durée de vie de la pile, et plus particulièrement dans le fait de garantir le fonctionnement des fonctionnalité indispensables de tels objets communicants tout au long de la durée de vie des piles.

Lorsque les objets communicants sont utilisés pour des mesures de consommation d'un fluide, il est reconnu que la fréquence des mesures influe grandement sur la précision de la mesure de la consommation. Plus la fréquence des mesures est importante, plus la mesure est précise. En contrepartie, plus la fréquence des mesures est importante, plus la consommation en énergie électrique est importante et pénalise la durée de vie de la pile à fournir de l'énergie électrique à l'objet communiquant.

Il est souhaitable de pallier ces inconvénients de l'état de la technique. Il est notamment souhaitable de fournir une solution qui permette d'assurer l'intégrité des données stockées et/ou fournies par ces objets communicants lorsque leurs piles arrivent en fin de vie, et ce tout en minimisant le surcoût matériel qu'entraînerait une telle solution. Il convient de noter qu'un surcoût matériel entraîne généralement un encombrement plus important (par exemple, des éléments capacitifs sont plus coûteux et plus encombrants que des transistors ou des résistances).

Ainsi, il est souhaitable de fournir un procédé de gestion d'un objet communicant permettant de réduire la consommation électrique du compteur communicant tout en garantissant une précision optimale dans la mesure d'une consommation de fluide.

Les objets communicants sont par exemple des compteurs communicants et l'invention permet de prolonger la capacité des piles à fournir de l'énergie électrique au compteur communiquant pendant une durée prédéfinie tout en garantissant des mesures optimales de consommation de fluide (gaz, eau...).

Dans l'état de la technique, on peut mentionner les documents US 4918995 A, US 11320347 B1, EP 2034281 A1 et US 2012/304779 A1.

## EXPOSE DE L'INVENTION

L'invention est définie par les revendications indépendantes.

Modes de réalisation préférés sont définis par les revendications dépendantes.

## BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

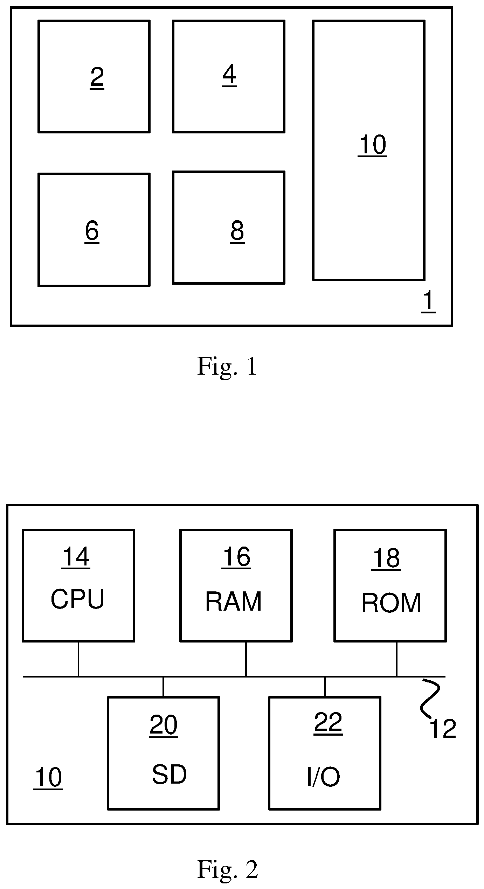

[Fig. 1] illustre schématiquement un algorigramme d'un procédé de gestion d'un compteur communicant ;

[Fig. 1] illustre schématiquement un exemple d'architecture matérielle d'un compteur communicant à pile ;

[Fig. 2] illustre schématiquement un exemple d'architecture matérielle d'une unité de contrôle d'un compteur communicant ;

[Fig. 3] illustre schématiquement un algorigramme d'un procédé de gestion d'un compteur communicant ;

[Fig. 4] est un graphique illustrant l'adaptation d'une fréquence de mesure à une consommation de fluide ;

[Fig. 5 ] est un graphique d'une consommation d'eau moyenne par heure ; et

[Fig. 6 ] est un graphique d'une normalisation des données du graphique de consommation d'eau moyenne par heure.

## EXPOSE DETAILLE DE MODES DE REALISATION

*Compteur communicant alimenté par pile*

En référence à la Fig. 1, il est proposé un objet communicant alimenté par une pile 2 et/ou par un branchement à un réseau de fourniture électrique. Il faut entendre le terme « pile » comme étant une unique pile, ou un ensemble de piles fournissant conjointement une source d'énergie électrique autonome.

La présente invention est décrite dans un mode de réalisation particulier où l'objet communicant est un compteur 1 de fluide, c'est-à-dire adapté et configuré pour mesurer une consommation d'un fluide (eau, gaz...). La présente invention est aussi applicable à des objets communicants tels que des capteurs de température, de pression, d'humidité....

Selon le mode de réalisation ici présenté, le compteur 1 comprend notamment une unité de mesure 4 pour acquérir des mesures, une unité de communication 6, une unité de signalement 8 pour émettre des signaux d'alarme, et une unité de contrôle 10.

Typiquement, l'unité de mesure 4 peut être adaptée et configurée pour mesurer une consommation d'eau, ou une consommation d'un autre fluide tel que du gaz. A ce titre, l'unité de mesure 4 comprend des moyens connus de mesure (métrologie) et de suivi d'une consommation d'eau.

L'unité de communication 6 comprend un ensemble d'organes de communication permettant la transmission des mesures acquises par l'unité de mesure 4, par exemple à une passerelle de collecte ou à une passerelle résidentielle.

Typiquement, l'unité de communication 6 comprend des organes de communication via un réseau téléphonique, via Internet (protocoles de communication sur IP, via un système LoRa (marque déposée) de la société Semtech, via un système Wi-Fi (marque déposée), via un système de type ZigBee (marque déposée) ou via un système de type Bluetooth (marque déposée). Selon une disposition particulière, l'unité de communication 6 comprend des organes de communication via des réseaux de type LPWAN (« Low Power Wide Area Network » en anglais) cellulaires dédiés aux objets connectés.

Tel que cela sera détaillé ci-après, le compteur 1 au travers de son unité de communication 6 peut privilégier certains canaux de communication en fonction de l'état de charge de la pile 2 et en fonction de la nature des données à transmettre.

L'unité de signalement 8 comprend de la circuiterie électronique pour émettre des signaux d'alarme. Typiquement, l'unité de signalement 8 peut comprendre des organes permettant l'émission de signaux optiques (par exemple, des diodes électroluminescentes). De plus, l'unité de signalement 8 peut transmettre des signaux d'alarme via l'unité de communication 6 pour transmettre les signaux d'alarme à des unités distantes via des systèmes sans fils comme énoncé précédemment.

L'unité de contrôle 10 comprend de la circuiterie électronique pour piloter et coordonner l'ensemble des unités précédemment citées (unité de mesure 4, unité de communication 6, unité de signalement 8). En outre, l'unité de contrôle 10 est adaptée pour implémenter un procédé de gestion détaillé ci-après.

La Fig. 2 illustre schématiquement un exemple d'architecture matérielle de l'unité de contrôle 10. Selon cet exemple, l'unité de contrôle 10 comporte, reliés par un bus de communication 12 : un processeur ou CPU (« Central Processing Unit » en anglais) 14 ; une mémoire vive RAM (« Random Access Memory » en anglais) 16 ; une mémoire morte ROM (« Read Only Memory » en anglais) 18 ; une unité de stockage ou un lecteur de support de stockage, tel qu'un lecteur de cartes SD (« Secure Digital » en anglais) 20 ; un ensemble d'interfaces 22 permettant à l'unité de contrôle 10 de communiquer avec les autres éléments de l'architecture matérielle présentée ci-dessus en relation avec la Fig. 1.

Le processeur 14 est capable d'exécuter des instructions chargées dans la RAM 16 à partir de la ROM 18, d'une mémoire externe, d'un support de stockage, ou éventuellement d'un réseau de communication. Lorsque l'unité de contrôle 10 est mise sous tension, le processeur 14 est capable de lire de la RAM 16 des instructions et de les exécuter. Ces instructions forment un programme d'ordinateur causant l'implémentation, par le processeur 14, de tout ou partie du procédé de gestion décrit ci-après.

Ainsi, tout ou partie du procédé de gestion décrit ci-après peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

*Procédé de gestion*

Selon un deuxième aspect, il est proposé un procédé 100 de gestion d'un compteur communicant, pour mesurer une consommation d'un fluide.

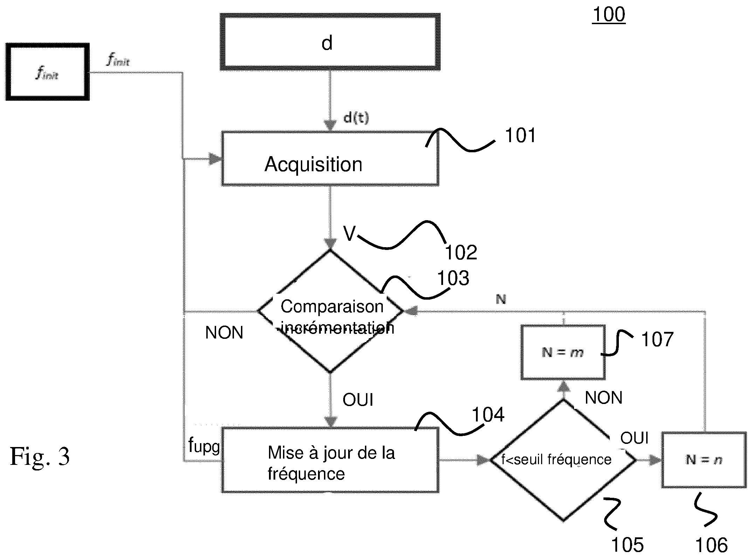

Tel que schématisé sur la Fig. 3, le procédé 100 de gestion comprend principalement les étapes suivantes :

(a) Acquérir (étape 101) au moins une valeur du débit d(t) de consommation du fluide à une fréquence paramétrable active $f_{act}$,

(e) Mettre à jour (étape 104) la fréquence paramétrable active $f_{act}$ au moins en fonction de la valeur du débit d(t) acquise, d'au moins une autre valeur de débit précédemment acquise et d'une fréquence déterminée à partir d'une probabilité non nulle p(t) d'une variation de débit de consommation du fluide supérieure à un seuil de variation de débit et réexécution du procédé avec la fréquence paramétrable active mise à jour.

Tel que cela sera décrit ci-après, le procédé 100 comprend des étapes supplémentaires.

Ainsi, d'une manière particulièrement avantageuse, le procédé 100 permet d'adapter la fréquence de mesure (i.e. la fréquence paramétrable active) en fonction de la valeur du débit, de la variation ou d'une probabilité non-nulle de variation du débit. L'adaptation de la valeur de la fréquence permet de réguler la consommation électrique du compteur en fonction d'un besoin d'une précision de mesure liée à la valeur du débit.

Il est précisé, que selon une disposition particulière, lorsque le compteur 1 démarre, c'est-à-dire que le procédé 100 débute sans que des données soient enregistrées en mémoire, la fréquence active est définie par une valeur prédéterminée qui peut être choisie par un utilisateur ou être définie préalablement, par exemple dans le cadre de préréglages d'usine.

Ainsi, selon une situation donnée à titre d'exemple, lorsque le compteur 1 est mis en marche, le procédé 100 commence à être exécuté et la fréquence active peut par exemple être fixée à 5Hz ou 10hz. Si un utilisateur commence à consommer du fluide, le débit peut par exemple passer de 0L/h à 100L/h en 0,1seconde. Ainsi, selon cet exemple, la variation du débit serait de 1000L/h/s. Selon cet exemple la valeur du débit à 100l/h pourrait être insuffisante pour nécessiter un changement de fréquence paramétrable active. En revanche, la valeur de la variation pourrait nécessiter une mise à jour de la fréquence paramétrable active, pour optimiser la précision de mesure face à une importante variation du débit.

Selon un autre exemple, l'utilisateur ne consomme pas de fluide, donc la valeur du débit est à 0L/h et la variation du débit est nulle. Mais, à cet instant, il y a une forte probabilité (par exemple 70% de chance) pour que l'utilisateur consomme du fluide. Donc, en tenant compte de cette probabilité, le procédé met à jour la fréquence paramétrable active.

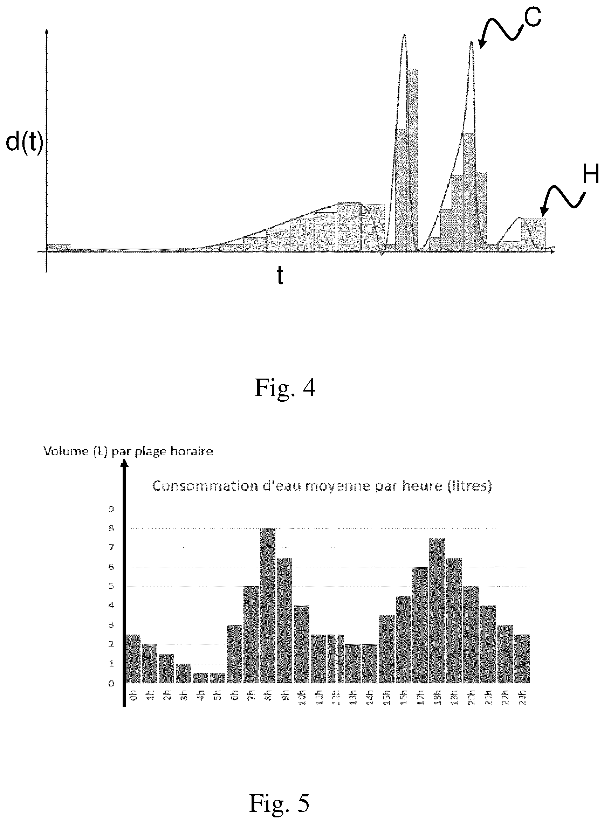

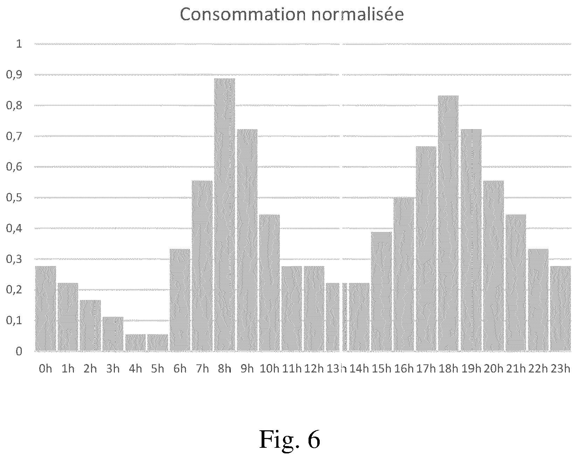

Plus précisément, selon un mode de réalisation, la probabilité utilisée est une probabilité initialement déterminée pour chaque plage horaire lors de l'installation du compteur 1 (i.e. lors d'une première mise en marche du compteur 1). Cette probabilité est déterminée à partir de données de consommations connues dans un parc de compteurs 1. Cette probabilité peut aussi être déterminée à partir de données de consommation générales connues. La Fig. 5 schématise un graphique d'une consommation d'eau moyenne par heure qui peut typiquement être utilisée pour déterminer la probabilité de consommation (dans le cas où le compteur 1 est un compteur d'eau). Une normalisation des donnés de la Fig. 5 est schématisée sur la Fig.6. Selon un mode de réalisation, les données normalisées de la Fig. 6 sont utilisées pour fixer une fréquence de mesure initiale pour chaque plage horaire. Tel que schématisés sur la Fig. 6, les valeurs normalisées sont comprises entre 0 et 1. Plus une valeur normalisée est proche de 1, plus la probabilité est élevée. Selon une disposition particulière, la probabilité de consommation est mise à jour en fonction de données de consommation mesurées par le compteur 1. Selon un mode de réalisation la probabilité est mise à jour toutes les semaines.

Le procédé intègre des étapes supplémentaires pour prendre en compte un nombre de mesures réalisées avant une mise à jour de la fréquence de mesure. Le procédé comprend les étapes suivantes :

(a) Acquérir (étape 101) au moins une valeur du débit *d(t)* de consommation du fluide à une fréquence paramétrable active $f_{act}$. Typiquement cette étape est réalisée par l'unité de mesure 4 du compteur.

(b) Incrémenter la valeur V (étape 102) d'un incrément d'un nombre d'acquisitions de valeurs du débit acquises à la fréquence paramétrable active $f_{init}$. En d'autres termes, pour chaque acquisition effectuée à l'étape (a), un incrément est incrémenté d'une valeur V discrète supplémentaire.

(c) Comparer (étape 103) la valeur V de l'incrément avec une valeur de seuil N. Tel que cela sera décrit ci-après, la valeur de seuil N est une valeur prédéterminée qui peut varier en fonction de la valeur de la fréquence paramétrable active $f_{act}$.

(d) Si la valeur V de l'incrément est inférieure à la valeur de seuil N, maintien de la fréquence paramétrable active $f_{act}$ pour acquérir au moins une nouvelle mesure à la fréquence paramétrable active. En d'autres termes, tant que la valeur V de l'incrément n'atteint pas le seuil N prédéterminé, la fréquence paramétrable active est conservée inchangée $f_{act}$.

(e) Si la valeur est au moins égale à la valeur de seuil, mise à jour (étape 104) de la fréquence paramétrable active $f_{act}$ au moins en fonction de la valeur du débit d(t) acquise, d'au moins une autre valeur de débit précédemment acquise et d'une fréquence obtenue à partir d'une probabilité non-nulle (p(t)) d'une variation de débit de consommation du fluide supérieure à un seuil de variation de débit et exécution de l'étape d'acquisition avec la fréquence paramétrable active et des étapes d'incrémentation, de comparaison et de maintien ou de mise à jour.

En pratique, le procédé 100 permet de faire varier la fréquence de mesure en fonction de la valeur du débit d du fluide ou de la variation du débit du fluide. Ainsi, en d'autres termes, cela permet d'augmenter la fréquence de mesure lorsque le débit augmente et, inversement, cela permet de réduire la fréquence de mesure lorsque le débit est interrompu ou faible. En référence, à la Fig. 4, la courbe C représente les variations du débit et les histogrammes H représentent des périodes et des augmentations de fréquence. La hauteur (en ordonnée) de chaque histogramme correspond à une fréquence : plus l'histogramme est haut plus la fréquence est élevée. La largeur en abscisse de chaque histogramme correspond à une durée : plus l'histogramme est large plus la fréquence a été maintenue longtemps. Sur la Fig. 4, on observe ainsi que le procédé 100 permet une adaptation de la fréquence au débit, ce qui permet de garantir une mesure précise du débit (et donc de la consommation), tout en permettant d'optimiser la consommation électrique du compteur (plus la fréquence de mesure est basse, plus la consommation électrique est faible).

*Première fréquence déterminée pour la mise à jour de la fréquence paramétrable active*

Selon une disposition particulière, la fréquence paramétrable active ($f_{act}$) est mise à jour en fonction d'une première fréquence ($f_1$) déterminée en fonction de la mesure acquise *d(t),* la première fréquence étant déterminée comme suit : $f_1 = \frac{d(t)-d_{min}}{d_{max}-d_{min}} \cdot [f_{max} - f_{min}] + f_{min}$ avec : $f_{min}$ une fréquence minimale prédéterminée, $f_{max}$ une

fréquence maximale prédéterminée, $d_{min}$ une valeur minimale mesurable et $d_{max}$ une valeur maximale mesurable, et d(t) une valeur de débit mesurée à un instant t.

*Deuxième fréquence déterminée pour la mise à jour de la fréquence paramétrable active*

Selon une disposition particulière, la fréquence paramétrable active ($f_{init}$) est mise à jour en fonction d'une deuxième fréquence ($f_2$) déterminée en fonction d'une variation de la valeur du débit acquise par rapport à au moins une valeur du débit précédemment acquise, la deuxième fréquence étant déterminée comme suit :

$$f_2 = \frac{\frac{d(t)-d(t-i)}{i} - d\prime_{min}}{d\prime_{max}-d\prime_{min}} \cdot [f_{max} - f_{min}] + f_{min}$$

avec d(t-i) une autre valeur de débit précédemment acquise, et i une date d'une précédente mesure, d'min une variation minimale d débit, et d'max une variation maximale du débit.

Il est précisé que d'min, la variation minimale du débit et d'max, la variation maximale du débit, sont des valeurs prédéterminées qui peuvent être fixées par un utilisateur du compteur 1.

*Troisième fréquence déterminée pour la mise à jour de la fréquence paramétrable active*

La fréquence déterminée $f_3$ à partir de la probabilité non-nulle d'une variation de débit déterminée est obtenue à partir de la probabilité non-nulle p(t) d'une variation de débit de consommation du fluide supérieure au seuil de variation de débit obtenue à partir d'une pluralité de mesures de valeurs du débit *d(t)* de consommation du fluide acquises pendant une période de temps au moins égale à une journée et la fréquence déterminée $f_3$ à partir de la probabilité non-nulle est proportionnelle à la probabilité non-nulle p(t).

En d'autres termes, la fréquence paramétrable active peut être déterminée à partir de la probabilité non-nulle de débit de consommation du fluide supérieure au seuil de débit obtenue si la grandeur mesurée présente une périodicité supérieure à un seuil prédéfini, c'est-à-dire une périodicité suffisante pour qu'une probabilité significative de débit puisse être calculée pour un intervalle de temps prédéterminé.

*Mise à jour de la fréquence paramétrable active*

Selon une disposition particulière, à l'étape (e), la fréquence paramétrable active est mise à jour en fonction de la valeur du débit acquise selon $f_{act} = \frac{1}{3} \sum_{j=1}^{3} a_j . f_j$

Selon une disposition alternative, à l'étape (e), la fréquence paramétrable active est mise à jour en fonction de la valeur du débit acquise selon $f_{act} = \max(f_1, f_2, f_3)$.

Il est précisé que le choix de la formule (i.e. du calcul) de mise à jour de la fréquence paramétrable active peut-être effectué par un utilisateur.

*Définition du seuil d'incrémentation*

Selon une disposition particulière, le procédé comprend une étape (f) dans laquelle la fréquence paramétrable active $f_{act}$ est comparée avec un seuil de fréquence prédéterminé (étape 105), si la fréquence paramétrable active $f_{act}$ est strictement inférieure au seuil de fréquence alors la valeur de seuil d'incrémentation N est définie par une première valeur de seuil d'incrémentation prédéterminée (étape 106), si la fréquence paramétrable active est supérieure ou égale au seuil de fréquence, alors la valeur de seuil d'incrémentation N est définie par une deuxième valeur de seuil d'incrémentation prédéterminée (étape 107).

Les seuils d'incrémentation sont des seuils prédéterminés qui peuvent être fixés par un utilisateur du compteur 1.

## Revendications

1.  Procédé (100) de gestion d'un compteur (1) communicant, pour mesurer une consommation d'un fluide, le compteur (1) comportant une unité de mesure (4) pour acquérir des mesures de consommation du fluide à une fréquence paramétrable,

    le procédé étant exécuté par le compteur (1) communicant et comportant l'étape:

    (a) effectuer une acquisition d'au moins une valeur du débit (d(t)) de consommation du fluide à une fréquence paramétrable active ($f_{act}$),

    le procédé étant **caractérise par** les étapes suivantes:

    (b) incrémenter la valeur (V) d'un incrément d'un nombre d'acquisitions de valeurs du débit acquises à la fréquence paramétrable active ($f_{act}$),
    (c) comparer la valeur (V) de l'incrément avec une valeur de seuil (N),
    (d) si la valeur (V) de l'incrément est inférieure à la valeur de seuil (N), maintenir la fréquence paramétrable active ($f_{act}$) pour acquérir au moins une nouvelle mesure à la fréquence paramétrable active,
    (e) si la valeur (V) de l'incrément est au moins égale à la valeur de seuil (N), mettre à jour la fréquence paramétrable active ($f_{act}$) au moins en fonction de la valeur du débit (d(t)) acquise, d'au moins une autre valeur de débit précédemment acquise et d'une fréquence déterminée à partir d'une probabilité non-nulle (p(t)) d'une variation de débit de consommation du fluide supérieure à un seuil de variation de débit et

**EP 4 300 261 B1**

réexécution du procédé avec la fréquence paramétrable active mise à jour.

2. Procédé (100) selon la revendication 1, dans lequel la fréquence paramétrable active ($f_{act}$) est mise à jour en fonction d'une première fréquence ($f_1$) déterminée en fonction de la valeur de débit acquise $d(t)$, la première fréquence ($f_1$) étant déterminée comme suit :

$$f_1 = \frac{d(t) - d_{min}}{d_{max} - d_{min}} \cdot [f_{max} - f_{min}] + f_{min}$$

avec : $f_{min}$ une fréquence minimale prédéterminée, $f_{max}$ une fréquence maximale prédéterminée, $d_{min}$ une valeur de débit minimale mesurable et $d_{max}$ une valeur de débit maximale mesurable, et d(t) une valeur de débit mesurée à un instant t.

3. Procédé (100) selon l'une quelconque des revendications précédentes, **caractérisé en ce que** la fréquence déterminée ($f_3$) à partir de la probabilité non-nulle (p(t)) d'une variation de débit de consommation du fluide supérieure au seuil de variation de débit est obtenue à partir d'une pluralité de mesures de valeurs du débit *(d(t))* de consommation du fluide acquises pendant une période de temps au moins égale à une journée et la fréquence déterminée ($f_3$) à partir de ladite probabilité non-nulle (p(t)) est proportionnelle à ladite probabilité non-nulle (p(t)).

4. Procédé (100) selon la revendication 3, dans lequel la fréquence paramétrable active ($f_{act}$) est mise à jour comme suit :

$$f_{act} = \frac{1}{3} \sum_{j=1}^{3} a_j . f_j$$

5. Procédé (100) selon la revendication 3, dans lequel la fréquence paramétrable active ($f_{act}$) est mise à jour comme suit :

$$f_{act} = \max(f_1, f_2, f_3).$$

6. Procédé (100) selon l'une quelconque des revendications précédentes, comprenant une étape (f) dans laquelle la fréquence paramétrable active ($f_{act}$) est comparée avec un seuil de fréquence prédéterminé, et si la fréquence paramétrable active ($f_{act}$) est strictement inférieure au seuil de fréquence prédéterminé, alors la valeur de seuil N est maintenue, et si la fréquence paramétrable active ($f_{act}$) est supérieure ou égale au seuil de fréquence prédéterminé, alors la valeur de seuil N est définie par une autre valeur de seuil prédéterminée

7. Compteur (1) communicant, pour mesurer une consommation d'un fluide, le compteur (1) communicant comportant une unité de mesure (4) pour acquérir des mesures de consommation du fluide à une fréquence paramétrable, le compteur (1) communicant comportant de la circuiterie électronique configurée pour :

(a) effectuer une acquisition d'au moins une valeur du débit (d(t)) de consommation du fluide à une fréquence paramétrable active ($f_{act}$),

**caractérisé en ce que** la circuiterie électronique est en outre configurée pour:

((b) incrémenter la valeur (V) d'un incrément d'un nombre d'acquisitions de valeurs du débit acquises à la fréquence paramétrable active ($f_{act}$),
(c) comparer la valeur (V) de l'incrément avec une valeur de seuil (N),
(d) si la valeur (V) de l'incrément est inférieure à la valeur de seuil (N), maintenir la fréquence paramétrable active ($f_{act}$) pour acquérir au moins une nouvelle mesure à la fréquence paramétrable active,
(e) si la valeur (V) de l'incrément est au moins égale à la valeur de seuil (N), mettre à jour la fréquence paramétrable active ($f_{act}$) au moins en fonction de la valeur du débit (d(t)) acquise, d'au moins une autre valeur de débit précédemment acquise et d'une fréquence déterminée à partir d'une probabilité non-nulle (p(t)) d'une variation de débit de consommation du fluide supérieure à un seuil de variation de débit et réexécution du procédé avec la fréquence paramétrable active mise à jour.

8. Produit programme d'ordinateur comprenant des instructions de code de programme pour exécuter le procédé de gestion selon l'une quelconque des revendications 1 à 6, lorsque lesdites instructions sont exécutées par un processeur d'un compteur communicant selon la revendication 7.

9. Support de stockage non transitoire sur lequel est stocké un programme d'ordinateur comprenant des instructions de code de programme pour exécuter le procédé de gestion selon l'une quelconque des revendications 1 à 6, lorsque lesdites instructions sont lues depuis ledit support de stockage non transitoire et exécutées par un processeur d'un compteur communicant selon la revendication 7.

**Patentansprüche**

1. Verfahren (100) zur Verwaltung eines intelligenten Zählers (1) zur Messung eines Verbrauchs eines Fluids, wobei der Zähler (1) eine Messeinheit (4) zur Erfassung von Verbrauchsmessungen des Fluids mit einer parametrierbaren Frequenz beinhaltet, wobei das Verfahren von dem intelligenten Zähler (1) ausgeführt wird und den folgenden Schritt beinhaltet:

   (a) Durchführen einer Erfassung wenigstens eines Werts des Verbrauchsdurchsatzes (d(t)) des Fluids mit einer aktiven parametrierbaren Frequenz ($f_{act}$),

   wobei das Verfahren durch die folgenden Schritte gekennzeichnet ist:

   (b) Inkrementieren des Werts (V) um ein Inkrement einer Anzahl von Erfassungen von Werten des Durchsatzes, die mit der aktiven parametrierbaren Frequenz ($f_{act}$) erfasst werden,
   (c) Vergleichen des Werts (V) des Inkrements mit einem Schwellenwert (N),
   (d) wenn der Wert (V) des Inkrements kleiner als der Schwellenwert (N) ist, Beibehalten der aktiven parametrierbaren Frequenz ($f_{act}$), um wenigstens eine neue Messung mit der aktiven parametrierbaren Frequenz zu erfassen,
   (e) wenn der Wert (V) des Inkrements wenigstens gleich dem Schwellenwert (N) ist, Aktualisieren der aktiven parametrierbaren Frequenz ($f_{act}$) wenigstens in Abhängigkeit von dem erfassten Wert des Durchsatzes (d(t)), von wenigstens einem anderen, zuvor erfassten Durchsatzwert und von einer Frequenz, die anhand einer Wahrscheinlichkeit ungleich null (p(t)) einer Verbrauchsdurchsatzvariation des Fluids bestimmt wird, die größer als eine Durchsatzvariationsschwelle ist, und erneute Ausführung des Verfahrens mit der aktualisierten aktiven parametrierbaren Frequenz.

2. Verfahren (100) nach Anspruch 1, wobei die aktive parametrierbare Frequenz ($f_{act}$) in Abhängigkeit von einer ersten Frequenz ($f_1$) aktualisiert wird, die in Abhängigkeit von dem erfassten Durchsatzwert d(t) bestimmt wird, wobei die erste Frequenz ($f_1$) wie folgt bestimmt wird:

$$f_1 = \frac{d(t) - d_{min}}{d_{max} - d_{min}} \cdot [f_{max} - f_{min}] + f_{min}$$

   wobei: $f_{min}$ eine vorbestimmte minimale Frequenz, $f_{max}$ eine vorbestimmte maximale Frequenz, $d_{min}$ ein messbarer minimaler Durchsatzwert und $d_{max}$ ein messbarer maximaler Durchsatzwert und d(t) ein zu einem Zeitpunkt t gemessener Durchsatzwert ist.

3. Verfahren (100) nach einem der vorhergehenden Ansprüche, **dadurch gekennzeichnet, dass** die Frequenz ($f_3$), die anhand der Wahrscheinlichkeit ungleich null (p(t)) einer Verbrauchsdurchsatzvariation des Fluids bestimmt wird, die größer als die Durchsatzvariationsschwelle ist, anhand einer Mehrzahl von Messungen von Werten des Verbrauchsdurchsatzes (d(t)) des Fluids erhalten wird, die über eine Zeitspanne von wenigstens gleich einem Tag erfasst werden, und die Frequenz ($f_3$), die anhand der Wahrscheinlichkeit ungleich null (p(t)) bestimmt wird, zu der Wahrscheinlichkeit ungleich null (p(t)) proportional ist.

4. Verfahren (100) nach Anspruch 3, wobei die aktive parametrierbare Frequenz ($f_{act}$) wie folgt aktualisiert wird:

$$f_{act} = \frac{1}{3} \sum_{j=1}^{3} a_j \cdot f_j$$

**5.** Verfahren (100) nach Anspruch 3, wobei die aktive parametrierbare Frequenz ($f_{act}$) wie folgt aktualisiert wird:

$$f_{act} = \max(f_1, f_2, f_3).$$

**6.** Verfahren (100) nach einem der vorhergehenden Ansprüche, das einen Schritt (f) umfasst, bei dem die aktive parametrierbare Frequenz ($f_{act}$) mit einer vorbestimmten Frequenzschwelle verglichen wird, und wenn die aktive parametrierbare Frequenz ($f_{act}$) streng kleiner als die vorbestimmte Frequenzschwelle ist, dann wird der Schwellenwert N beibehalten, und wenn die aktive parametrierbare Frequenz ($f_{act}$) größer als oder gleich der vorbestimmten Frequenzschwelle ist, dann wird der Schwellenwert N von einem anderen vorbestimmten Schwellenwert festgelegt

**7.** Intelligenter Zähler (1) zur Messung eines Verbrauchs eines Fluids, wobei der intelligente Zähler (1) eine Messeinheit (4) zur Erfassung von Verbrauchsmessungen des Fluids mit einer parametrierbaren Frequenz beinhaltet, wobei der intelligente Zähler (1) eine elektronische Schaltung beinhaltet, die für Folgendes ausgebildet ist:

(a) Durchführen einer Erfassung wenigstens eines Werts des Verbrauchsdurchsatzes (d(t)) des Fluids mit einer aktiven parametrierbaren Frequenz ($f_{act}$),

**dadurch gekennzeichnet, dass** die elektronische Schaltung ferner für Folgendes ausgebildet ist:

(b) Inkrementieren des Werts (V) um ein Inkrement einer Anzahl von Erfassungen von Werten des Durchsatzes, die mit der aktiven parametrierbaren Frequenz ($f_{act}$) erfasst werden,
(c) Vergleichen des Werts (V) des Inkrements mit einem Schwellenwert (N),
(d) wenn der Wert (V) des Inkrements kleiner als der Schwellenwert (N) ist, Beibehalten der aktiven parametrierbaren Frequenz ($f_{act}$), um wenigstens eine neue Messung mit der aktiven parametrierbaren Frequenz zu erfassen,
(e) wenn der Wert (V) des Inkrements wenigstens gleich dem Schwellenwert (N) ist, Aktualisieren der aktiven parametrierbaren Frequenz ($f_{act}$) wenigstens in Abhängigkeit von dem erfassten Wert des Durchsatzes (d(t)), von wenigstens einem anderen, zuvor erfassten Durchsatzwert und von einer Frequenz, die anhand einer Wahrscheinlichkeit ungleich null (p(t)) einer Verbrauchsdurchsatzvariation des Fluids bestimmt wird, die größer als eine Durchsatzvariationsschwelle ist, und erneute Ausführung des Verfahrens mit der aktualisierten aktiven parametrierbaren Frequenz.

**8.** Computerprogrammprodukt, das Programmcode-Anweisungen umfasst, um das Verwaltungsverfahren nach einem der Ansprüche 1 bis 6 auszuführen, wenn die Anweisungen von einem Prozessor eines intelligenten Zählers nach Anspruch 7 ausgeführt werden.

**9.** Nichtflüchtiges Speichermedium, auf dem ein Computerprogramm gespeichert ist, das Programmcode-Anweisungen umfasst, um das Verwaltungsverfahren nach einem der Ansprüche 1 bis 6 auszuführen, wenn die Anweisungen aus dem nichtflüchtigen Speichermedium gelesen und von einem Prozessor eines intelligenten Zählers nach Anspruch 7 ausgeführt werden.

## Claims

**1.** Method (100) for managing a communicating meter (1), for measuring consumption of a fluid, the meter (1) comprising a measurement unit (4) for acquiring measurements of consumption of the fluid at a parameterisable frequency, the method being implemented by the communicating meter (1) and comprising the step:

(a) acquiring at least one value of the consumption flow rate (d(t)) of the fluid at an active parameterisable frequency ($f_{act}$),

the method being **characterised by** the following steps:

(b) incrementing the value (V) of an increment by a number of acquisitions of values of the flow rate acquired at the active parameterisable frequency ($f_{act}$),

(c) comparing the value (V) of the increment with a threshold value (N),

(d) if the value (V) of the increment is lower than the threshold value (N), maintaining the active parameterisable frequency ($f_{act}$) to acquire at least one new measurement at the active parameterisable frequency,

(e) if the value (V) of the increment is at least equal to the threshold value (N), updating the active parameterisable frequency ($f_{act}$) at least according to the value of the flow rate (d(t)) acquired, according to at least one other flow rate value previously acquired and according to a frequency determined from a non-zero probability (p(t)) of a variation in consumption flow rate of the fluid higher than a flow rate variation threshold, and reimplementation of the method with the updated active parameterisable frequency.

2. Method (100) according to claim 1, wherein the active parameterisable frequency ($f_{act}$) is updated according to a first frequency ($f_1$) determined according to the flow rate value $d(t)$ acquired, the first frequency ($f_1$) being determined as follows:

$$f_1 = \frac{d(t) - d_{min}}{d_{max} - d_{min}} \cdot [f_{max} - f_{min}] + f_{min}$$

with: $f_{min}$ a predetermined minimum frequency, $f_{max}$ a predetermined maximum frequency, $d_{min}$ a measurable minimum flow rate value and $d_{max}$ a measurable maximum flow rate value, and d(t) a flow rate value measured at an instant t.

3. Method (100) according to any one of the preceding claims, **characterised in that** the frequency ($f_3$) determined from the non-zero probability (p(t)) of a variation in consumption flow rate higher than the flow rate variation threshold is obtained from a plurality of measurements of values of the consumption flow rate $d(t)$ of the fluid acquired during a period of time at least equal to one day and the frequency ($f_3$) determined from said non-zero probability (p(t)) is proportional to said non-zero probability (p(t)).

4. Method (100) according to claim 3, wherein the active parameterisable frequency ($f_{act}$) is updated as follows:

$$f_{act} = \frac{1}{3} \sum_{j=1}^{3} a_j \cdot f_j$$

5. Method (100) according to claim 3, wherein the active parameterisable frequency ($f_{act}$) is updated as follows:

$$f_{act} = \max(f_1, f_2, f_3).$$

6. Method (100) according to any one of the preceding claims, comprising a step (f) in which the active parameterisable frequency ($f_{act}$) is compared with a predetermined frequency threshold and, if the active parameterisable frequency ($f_{act}$) is strictly lower than the predetermined frequency threshold, then the threshold value N is maintained and, if the active parameterisable frequency ($f_{act}$) is higher than or equal to the predetermined frequency threshold, then the threshold value N is defined by another predetermined threshold value.

7. Communicating meter (1), for measuring consumption of a fluid, the communicating meter (1) comprising a measurement unit (4) for acquiring measurements of consumption of the fluid at a parameterisable frequency, the communicating meter (1) comprising electronic circuitry configured to:

(a) acquire at least one value of the consumption flow rate (d(t)) of the fluid at an active parameterisable frequency *(fact),*

**characterised in that** the electronic circuitry is furthermore configured to:

(b) increment the value (V) of an increment by a number of acquisitions of values of the flow rate acquired at the active parameterisable frequency *(fact),*

(c) compare the value (V) of the increment with a threshold value (N),

(d) if the value (V) of the increment is lower than the threshold value (N), maintain the active parameterisable frequency ($f_{act}$) to acquire at least one new measurement at the active parameterisable frequency,

(e) if the value (V) of the increment is at least equal to the threshold value (N), update the active parameterisable frequency ($f_{act}$) at least according to the value of the flow rate (d(t)) acquired, according to at least one other flow rate value previously acquired and according to a frequency determined from a non-zero probability (p(t)) of a variation in consumption flow rate of the fluid higher than a flow rate variation threshold, and reimplementation of the method with the updated active parameterisable frequency.

8.   Computer program product comprising program code instructions for executing the management method according to any one of claims 1 to 6, when said instructions are executed by a processor of a communicating meter according to claim 7.

9.   Non-transient storage medium on which a computer program product is stored, comprising program code instructions for executing the method according to any one of claims 1 to 6, when said instructions are read from said non-transient storage medium and executed by a processor of a communicating meter according to claim 7.

Fig. 1

Fig. 2

EP 4 300 261 B1

Fig. 3

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4918995 A
- US 11320347 B1
- EP 2034281 A1
- US 2012304779 A1